(19) Europäisches Patentamt
European Patent Office
Office européen des brevets

(11) **EP 4 168 731 B1**

(12) **FASCICULE DE BREVET EUROPEEN**

(45) Date de publication et mention
de la délivrance du brevet:
**01.05.2024 Bulletin 2024/18**

(21) Numéro de dépôt: **21731760.1**

(22) Date de dépôt: **09.06.2021**

(51) Classification Internationale des Brevets (IPC):
**G01B 7/00** *(2006.01)* **G01B 7/02** *(2006.01)*
**G01D 5/24** *(2006.01)* **G01D 5/241** *(2006.01)*

(52) Classification Coopérative des Brevets (CPC):
**G01D 5/24; G01B 7/14; G01D 5/2412**

(86) Numéro de dépôt international:
**PCT/EP2021/065395**

(87) Numéro de publication internationale:
**WO 2021/254839 (23.12.2021 Gazette 2021/51)**

(54) **SYSTEME DE CAPTEUR DE DEPLACEMENT CAPACITIF A PEIGNES IMBRIQUES**

KAPAZITIVES WEGSENSORSYSTEM MIT INEINANDERGREIFENDEN KÄMMEN

CAPACITIVE DISPLACEMENT SENSOR SYSTEM WITH INTERDIGITED COMBS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.06.2020 FR 2006374**

(43) Date de publication de la demande:
**26.04.2023 Bulletin 2023/17**

(73) Titulaire: **THALES**
**92190 Meudon (FR)**

(72) Inventeur: **BOUYAT, Stéphane**
**86101 CHATELLERAULT (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 0 354 386 EP-A1- 3 252 429
US-A1- 2002 011 850 US-A1- 2007 256 502
US-A1- 2011 255 228**

EP 4 168 731 B1

**Description**

L'invention porte sur un système de capteur de déplacement capacitif à peignes imbriqués, comprenant une détection capacitive selon une direction perpendiculaire aux surfaces des peignes en vis-à-vis, les peignes étant soumis à un mouvement sinusoïdal selon ladite direction.

Le domaine d'application de l'invention est les capteurs utilisant des peignes capacitifs comme moyen de détection ou de contre-réaction.

De nombreux capteurs utilisent l'effet capacitif pour déterminer une grandeur mesurée ou injecter une force de contre-réaction.

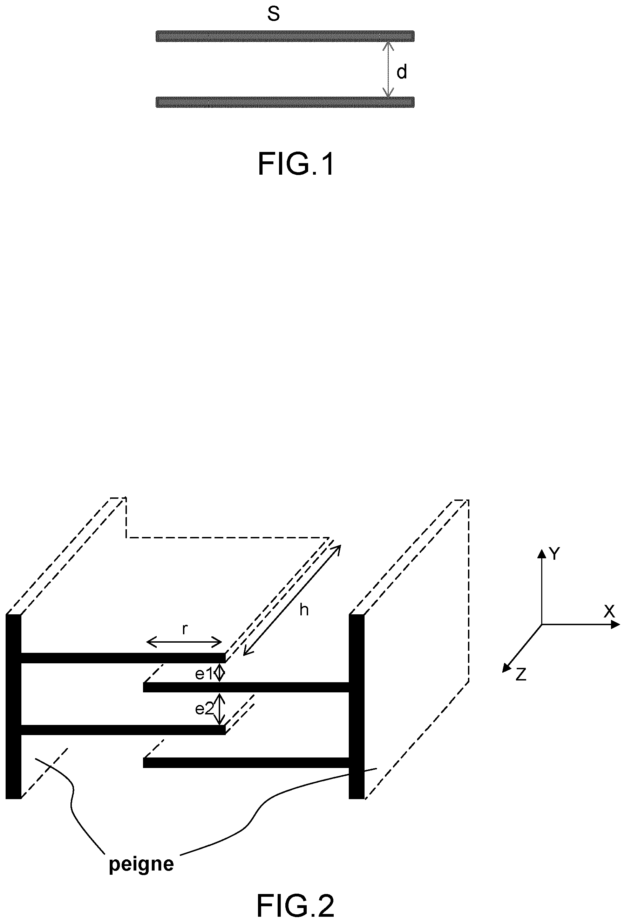

La capacité élémentaire C est constituée généralement d'une surface fixe en vis-à-vis d'une surface mobile, comme illustré sur la figure 1, et peut s'exprimer par la relation suivante :

$$C = \varepsilon S/d$$

dans laquelle :

S représente l'aire des surfaces en vis-à-vis ;
d représente la distance entre surfaces ;
$\varepsilon$ représente permittivité diélectrique du matériau.

Afin d'en augmenter la surface et donc l'efficacité, ces capacités peuvent être organisées sous forme de peignes (deux peignes imbriqués). Cet arrangement permet également, au-delà de multiplier les surfaces en vis-à-vis, un fonctionnement suivant deux axes, en l'espèce les axes x et y.

En notant les grandeurs suivantes, comme illustré sur la figure 2 :

n : nombre de dents d'un peigne (répétition du motif unitaire) ;
$e_1$ : entrefer 1, en m ;
$e_2$ : entrefer 2 (peut être égal à entrefer 1 en cas de construction symétrique), en m ;
r : recouvrement des peignes, en m ;
h : profondeur des dents des peignes (selon l'axe z), en m.

Ainsi, la capacité peut s'exprimer par la relation suivante :

$$C = \varepsilon.n.h.r.(1/e1+1/e2)$$

Si on raisonne en détection et comme évoqué précédemment, deux types de déplacements sont envisageables :

déplacement suivant l'axe x : $r = r_0+x$ ($r_0$ correspondant à la valeur de r au repos ou en position d'équilibre) ; et
déplacement suivant l'axe y : $e_1 = e1_0+y$ ($e1_0$ correspondant à la valeur de e1 au repos ou en position d'équilibre) et $e2 = e2_0-y$ ($e2_0$ correspondant à la valeur de e2 au repos ou en position d'équilibre).

Lors d'un déplacement selon l'axe x, on obtient donc une relation linéaire entre x et la variation de capacité :

$$C = \varepsilon.n.h.r_0.(1/e1+1/e2) + \varepsilon.n.h.x.(1/e1+1/e2)$$

que l'on peut noter $C_0 + dC(x)$ avec $de = k.x$ en posant $k = \varepsilon.n.h.(1/e1+1/e2)$.

Ce cas de fonctionnement ne présente pas de difficulté de traitement de l'information, le déplacement selon l'axe x étant directement et linéairement contenu dans le signal de variation capacitive.

Lors d'un déplacement selon l'axe y, la capacité peut s'exprimer par :

$$C = \varepsilon.n.h.r.(1/(e1_0+y)+1/(e2_0-y)).$$

En se limitant à un développement limité d'ordre 3, on obtient la relation suivante :

$C = \varepsilon.n.h.r\ [e1_0^{-1}.(1-y/e1_0+y^2/e1_0^2-y3/e1_0^3) + e2_0^{-1}.(1+y/e2_0+y^2/e2_0^2+y^3/e2_0^3)]$ que l'on peut noter $C_0+dC(x)$

On a donc $C = k10+k11.y+k12.y^2+k13.y^3 + k20+k21.y+k22.y^2+k23.\ y^3$ correspondant à $C_0 + dC(y)$ avec :

$$C_0 = k10 + k20$$

$$dC = (k11+k21).y + (k21+k22).y^2 + (k31+k32).y^3 = k1.y + k2.y^2 + k3.y^3\ ;$$

et

$$k0 = \varepsilon.n.h.r/e1_0 + \varepsilon.n.h.r/e2_0$$

$$k1 = -\varepsilon.n.h.r/e1_0^2 + \varepsilon.n.h.r/e2_0^2$$

$$k2 = \varepsilon.n.h.r/e1_0^3 + \varepsilon.n.h.r/e2_0^3$$

$$k3 = -\varepsilon.n.h.r/e1_0^4 + \varepsilon.n.h.r/e2_0^4$$

Il apparait que l'exploitation du mouvement selon l'axe y fait apparaître des termes harmoniques. Dans certaines architectures des peignes dits complémentaires sont implémentés fonctionnant en opposition de phase, c'est-à-dire que lorsqu'une capacité augmente d'un côté, celle du côté complémentaire diminue. L'information de déplacement est ensuite obtenue par soustraction des deux côtés complémentaires : cet arrangement élimine certains défaut de mode commun et notamment supprime (ou réduit fortement) les termes harmoniques pairs mais double les termes impairs.

La présence de ces termes harmoniques peut se révéler néfaste dans le cas de traitements relatifs à certains capteurs résonnant de haute précision pour lesquels il est primordial d'avoir accès à une fidèle image du déplacement mécanique.

Le document EP 3 252 429 A1 décrit un gyroscope microélectromécanique et le document US 9797750 décrit une méthode de linéarisation de détection capacitive. Ce procédé utilise quatre électrodes qui produisent des signaux de phases 0°, 90°, -90° et 180°. La linéarisation du signal est obtenue en effectuant des calculs radiométriques sur les signaux en quadrature.

En outre, la réalisation d'électrodes fournissant des signaux à 90° peut, suivant l'architecture du capteur, présenter des difficultés de réalisation. Ce document ne justifie pas non plus de la dégradation de la performance de linéarisation dans le cas d'imperfection de réalisation des jeux d'électrodes (i.e. dégradation des phases relatives inter-électrodes).

Un but de l'invention est de pallier les problèmes précédemment cités, et notamment de permettre une correction par traitement en conservant des électrodes classiques.

Aussi, il est proposé, selon un aspect de l'invention, un système de capteur de déplacement capacitif à peignes imbriqués, comprenant une détection capacitive selon une direction perpendiculaire aux surfaces des peignes en vis-à-vis, les peignes étant soumis à un mouvement sinusoïdal selon ladite direction, comprenant :

- un dispositif de conversion en tension électrique de la capacité délivrée par le capteur ;
- un convertisseur analogique/numérique configuré pour numériser la tension électrique délivrée par le dispositif de conversion, et fournir un signal numérisé ; et
- une unité de commande comprenant :

  - un estimateur harmonique configuré pour estimer les amplitudes des harmoniques d'ordre inférieur ou égal à un ordre maximum à partir du signal numérisé et un angle de référence correspondant à l'angle instantané de la pulsation d'entrée ; et
  - un module de reconstitution du signal à partir des amplitudes et de l'angle de référence fournis par l'estimateur harmonique et du signal numérisé délivré par le dispositif de conversion.

Un tel système, permet de reconstituer le signal de déplacement débarrassé de ses harmoniques, donnant de meilleures performances dans le cas de traitements de capteurs dits "résonnants" comme un gyromètre de type microsystème électromécanique ou Mems pour acronyme de "Microelectromechanical systems" en langue anglaise.

Selon un mode de réalisation, l'estimateur harmonique comprend une boucle à verrouillage de phase, verrouillée sur le signal numérisé délivré par le convertisseur analogique/numérique, délivrant l'angle de référence et un module d'estimation des amplitudes des harmoniques d'ordre inférieur ou égal à l'ordre maximum.

Ainsi, il est possible de réutiliser la boucle à verrouillage de phase souvent déjà présente dans le cas de traitements de capteurs résonnants.

Dans un mode de réalisation, la boucle à verrouillage de phase comprend un comparateur de phase, un module filtre passe-bas et correcteur de boucle, et un accumulateur de phase disposés en série, le comparateur de phase recevant en entrée le signal numérisé et l'angle de référence délivré en sortie de l'accumulateur de phase, et délivrant en sortie un signal d'erreur de phase au module filtre passe-bas et correcteur de boucle, le module filtre passe-bas et correcteur de boucle filtrant les termes de haute fréquences supérieures à un seuil et corrigeant l'angle de référence, délivrant en sortie une consigne de fréquence à l'accumulateur de phase déterminant l'angle de référence par sommation de pas de phase élémentaires.

Ainsi, on dispose d'un angle de référence qui peut être utilisé directement par l'estimateur harmonique.

Selon un mode de réalisation, le module d'estimation des amplitudes des harmoniques d'ordre inférieur ou égal à l'ordre maximum comprend, pour chaque amplitude d'harmonique, un premier multiplicateur multipliant l'angle de référence par l'ordre de l'amplitude harmonique, un module cosinus si l'ordre est pair ou un module sinus si l'ordre est impair recevant en entrée la sortie du premier multiplicateur, un deuxième multiplicateur multipliant la sortie du module cosinus ou sinus par le signal numérisé, et un filtre passe-bas disposant d'un gain statique inverse du coefficient de développement trigonométrique, délivrant l'amplitude harmonique de l'ordre.

Ainsi, ce procédé reste très économique, en limitant la surface de réalisation car il n'évalue que les termes harmoniques choisis.

Dans un mode de réalisation, le module de reconstitution du signal comprend :

- un module sinus recevant en entrée l'angle de référence délivré par l'estimateur harmonique, et délivrant son sinus en sortie ;
- pour chaque amplitude d'harmonique d'ordre inférieur ou égal à l'ordre maximum, un module d'élévation du sinus de l'angle de référence à la puissance l'ordre, un troisième multiplicateur multipliant la sortie délivrée par le module d'élévation par l'amplitude harmonique de l'ordre délivré par l'estimateur harmonique ;
- un additionneur recevant en entrée les sorties des troisièmes multiplicateurs ; et
- un soustracteur configuré pour soustraire la somme délivrée par l'additionneur au signal numérisé.

Ainsi, ce procédé reste très économique, en limitant la surface de réalisation car il n'évalue que les termes harmoniques choisis.

Selon un mode de réalisation, le système fonctionne en boucle fermée, comprenant une boucle de rétroaction du signal reconstitué en sortie du module de reconstitution vers l'estimateur harmonique.

Ainsi, un fonctionnement en boucle fermée permet de corriger d'autres défauts harmoniques qui peuvent être introduits, par exemple par la chaîne analogique de mise en forme, et ainsi globalement éliminer les termes harmoniques désirés. De la même manière, une dérive dans le temps de l'amplitude des termes harmoniques peut être compensée car le fonctionnement en boucle fermée annule en continu les harmoniques sélectionnées.

Dans un mode de réalisation, le signal reconstitué remplace le signal d'entrée en entrée des deuxièmes multiplicateurs, et dans lequel des correcteurs présentant une fonction intégrale remplacent les filtres passe-bas.

Dans un mode de réalisation, l'ordre maximum vaut 3.

L'invention sera mieux comprise à l'étude de quelques modes de réalisation décrits à titre d'exemples nullement limitatifs et illustrés par le dessin annexé sur lequel :

[Fig.1] illustre schématiquement la capacité élémentaire d'une surface fixe en vis-à-vis d'une surface mobile, selon l'état de l'art ;

[Fig.2] illustre schématiquement un capteur de déplacement capacitif à peignes imbriqués, selon l'état de l'art ;

[Fig.3] illustre schématiquement un système de capteur de déplacement capacitif à peignes imbriqués, selon un aspect de l'invention ;

[Fig.4] illustre schématiquement un système de capteur de déplacement capacitif à peignes imbriqués, selon un aspect de l'invention ;

[Fig.5] illustre schématiquement un système de capteur de déplacement capacitif à peignes imbriqués, selon un aspect de l'invention ; et

[Fig.6] illustre schématiquement un système de capteur de déplacement capacitif à peignes imbriqués, selon un aspect de l'invention.

Sur l'ensemble des figures, les éléments ayant des références identiques sont similaires.

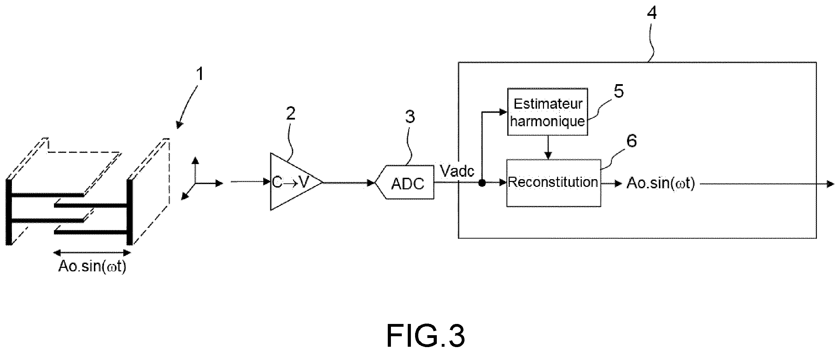

Sur la figure 3 est illustré, selon un aspect de l'invention un système de capteur 1 de déplacement capacitif à peignes imbriqués, comprenant une détection capacitive selon une direction y perpendiculaire aux surfaces des peignes en vis-à-vis, les peignes étant soumis à un mouvement sinusoïdal $A_0.\sin(\omega t)$ selon ladite direction y, comprenant :

- un dispositif de conversion 2 en tension électrique de la capacité délivrée par le capteur 1 ;
- un convertisseur analogique/numérique 3, ou ADC pour acronyme de "Analogic Digital Converter" en langue anglaise, configuré pour numériser la tension électrique V délivrée par le dispositif de conversion 2, et fournir un signal numérisé Vadc ; et
- une unité de commande 4 comprenant :

    - un estimateur harmonique 5 configuré pour estimer les amplitudes des harmoniques d'ordre inférieur ou égal à un ordre maximum à partir du signal numérisé Vadc et un angle de référence $\alpha$ correspondant à l'angle instantané de la pulsation d'entrée $\alpha=\omega t$ ; et
    - un module 6 de reconstitution du signal à partir des amplitudes et de l'angle de référence $\alpha$ fournis par l'estimateur harmonique 5 et du signal numérisé Vadc délivré par le convertisseur 3.

On considère une détection capacitive fonctionnant suivant l'axe y et soumis à un mouvement mécanique sinusoïdal $A_0.\sin(\omega t)$. Le signal électrique image de la variation de capacité est affecté de défauts harmoniques comme présenté précédemment. D'autres défauts harmoniques peuvent être ajoutés par le dispositif de conversion capacité C en tension électrique V (tel un amplificateur de charge). La chaîne de traitement de l'information peut se schématiser comme suit :

- les peignes sont soumis à un mouvement sinusoïdal suivant l'axe y ;
- on procède à une conversion 2 en tension électrique de la capacité délivrée par le capteur 1 (amplificateur de charge, capacités commutées ou autres dispositifs similaires) suivie d'une conversion analogique/numérique 3 ;
- l'information numérique Vadc est ensuite traitée dans une unité de commande électronique 4 comprenant l'estimateur harmonique 5 et le module 6 de reconstitution du signal.

L'idée est d'estimer les termes harmoniques afin de pouvoir retrouver le signal de déplacement initial des peignes du capteur. On considérera, dans la suite de la description, les harmoniques d'ordre 2 et d'ordre 3 mais de manière non limitative, car l'invention peut s'appliquer sur les harmoniques supérieures de la même manière.

On considère que la conversion (avec amplification) de capacité en tension électrique supprime la composante continue DC (courant continu d'acronyme DC pour "direct current" en langue anglaise, correspondant au terme k0).

les termes d'ordres supérieurs englobent la fonction de transfert du dispositif de conversion 2 et du convertisseur 3, et on prend $A_0=1$ pour simplifier les équations, mais de manière non limitative.

Le signal numérisé Vadc, du fait des non-linéarités des peignes, est de la forme suivante :

$$\text{Vadc} = \text{k1}.\sin(\omega t) + \text{k2}.[\sin(\omega t)]^2 + \text{k3}.[\sin(\omega t)]^3$$

Or, comme $\sin^2(\omega t) = [1-\cos(2\omega t)]/2$ et $\sin^3(\omega t) = [3\sin(\omega t) - \sin(3\omega t)]/4$, on obtient la relation suivante :

$$\text{Vadc} = [\text{k1}+\tfrac{3}{4}.\text{k3}].\sin(\omega t) + [-\tfrac{1}{2}.\text{k2}].\cos(2\omega t) + [-\tfrac{1}{4}.\text{k3}].\sin(3\omega t)$$

Le terme de composante continue DC relatif au coefficient k2 n'est pas conservé car on a fait l'hypothèse que la conversion capacité vers tension (C→V) ne conserve pas la composante continue.

Il apparait des termes en $\cos(2\omega t)$ et $\sin(3\omega t)$ pondérés par les non linéarités d'ordres 2 et 3. Une première forme de réalisation de l'estimation des harmoniques pourrait être une DFT ou FFT permettant, à partir des trois raies à $\omega t$, $2\omega t$ et $3\omega t$ de remonter aux coefficients k2 et k3. Même si cette approche peut être retenue, elle présente l'inconvénient de nécessiter de réaliser une DFT ou FFT qui, si l'on cherche de la précision, peut s'avérer gourmande d'un point de vue implémentation (surface silicium, temps de calcul).

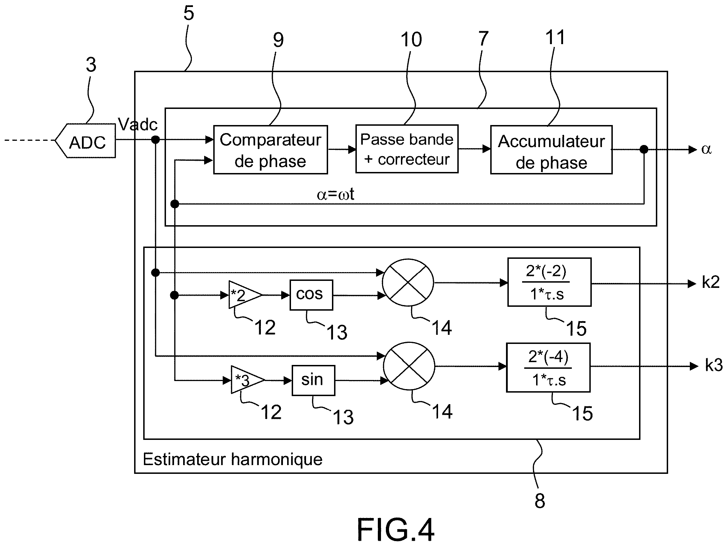

Comme illustré sur la figure 4, l'estimateur harmonique 5 comprend une boucle à verrouillage de phase 7, verrouillée sur le signal numérisé Vadc délivré par le convertisseur analogique/numérique 3, délivrant l'angle de référence $\alpha$ et un module d'estimation 8 des amplitudes des harmoniques d'ordre inférieur ou égal à l'ordre maximum.

L'approche retenue est d'utiliser une boucle à verrouillage de phase 7 ou PLL pour acronyme "Phase Lock Loop" en langue anglaise, verrouillée sur le signal provenant du convertisseur analogique/numérique 3.

La boucle à verrouillage de phase 7 comprend un comparateur de phase 9, un module 10 filtre passe-bas et correcteur de boucle, et un accumulateur de phase 11 disposés en série, le comparateur de phase 9 recevant en entrée le signal numérisé Vadc et l'angle de référence $\alpha$ délivré en sortie de l'accumulateur de phase 11, et délivrant en sortie un signal d'erreur de phase EP au module 10 filtre passe-bas et correcteur de boucle, le module 10 filtre passe-bas et correcteur de boucle filtrant les termes de haute fréquences supérieures à un seuil et corrigeant l'angle de référence, délivrant en sortie une consigne de fréquence à l'accumulateur de phase déterminant l'angle de référence par sommation de pas de phase élémentaires.

La sortie de l'accumulateur de phase est donc l'angle instantané de la pulsation d'entrée $\alpha = \omega t$.

Avec la présence de la PLL 7, il est possible de faire une démodulation cohérente du signal d'entrée Vadc, ce qui équivaut à réaliser la transformation de Fourier discrète ou DFT pour acronyme de "discrète Fourier transform" en langue anglaise, seulement pour les fréquences d'intérêt. Le rapport d'amplitude de la fondamentale, combiné au filtre de boucle de la PLL, permet à la PLL d'être verrouillée en phase sur la fondamentale.

Par ailleurs, à partir de l'angle verrouillé $\alpha$, on crée facilement les signaux $2\alpha$ et $3\alpha$ et ensuite les termes $\cos(2\omega t)$ et $\sin(3\omega t)$.

Le module d'estimation 8 des amplitudes des harmoniques d'ordre inférieur ou égal à l'ordre maximum comprend, pour chaque amplitude d'harmonique (en l'espèce d'ordre 2 et d'ordre 3) comprend un premier multiplicateur 12 multipliant l'angle de référence $\alpha$ par l'ordre de l'amplitude harmonique, un module 13 cosinus si l'ordre est pair ou un module sinus si l'ordre est impair recevant en entrée la sortie du premier multiplicateur 12, un deuxième multiplicateur 14 multipliant la sortie du module 13 cosinus ou sinus par le signal numérisé Vadc, et un filtre passe-bas 15 disposant d'un gain statique inverse du coefficient de développement trigonométrique, délivrant l'amplitude harmonique ki de l'ordre i.

Cet estimateur harmonique 5 constitue la partie estimation des harmoniques. Son principe n'est pas limité aux ordres 2 et 3, il peut être étendu aux ordres supérieurs.

Dans le cas d'une estimation harmonique des termes d'ordres 2 et 3, les signaux de référence $\cos(2\omega t)$ et $\sin(3\omega t)$ sont multipliés par le signal numérisé d'entrée Vadc. Ceci équivaut à estimer la puissance des termes d'ordre 2 et 3 en ramenant en courant continu DC ces niveaux :

- un filtrage passe-bas permet de conserver la partie continue et de filtrer les termes de hautes fréquences ;
- un gain de 2 permet de compenser le facteur ½ dû à la multiplication des deux termes sinusoïdaux ; et
- les gains de -2 ou -4 permettent de compenser les gains harmoniques (cf équation Vadc = [k1+¾.k3].sin($\omega$t) + [-½.k2].cos(2($\omega$t) + [-¼.k3].sin(3$\omega$t)).

Ce procédé permet d'estimer dynamiquement les termes k2 et k3 des niveaux harmoniques.

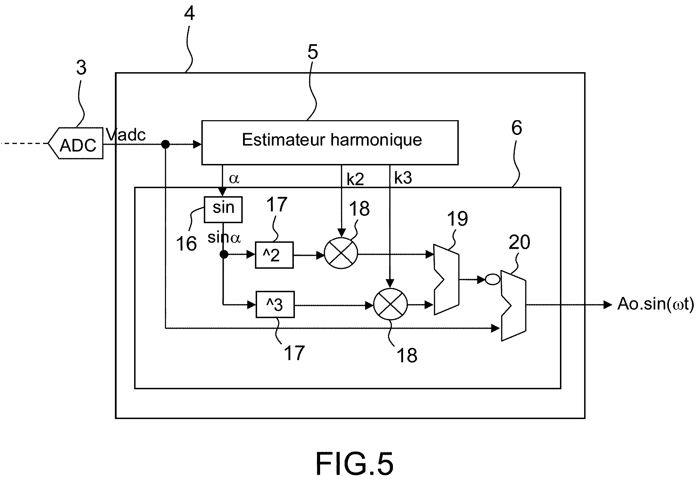

Comme illustré sur la figure 5, le module de reconstitution du signal comprend :

- un module sinus 16 recevant en entrée l'angle de référence $\alpha$ délivré par l'estimateur harmonique 5, et délivrant son sinus en sortie ;
- pour chaque amplitude d'harmonique d'ordre inférieur ou égal à l'ordre maximum, un module 17 d'élévation du sinus de l'angle de référence à la puissance l'ordre, un troisième multiplicateur 18 multipliant la sortie délivrée par le module 17 d'élévation par l'amplitude harmonique k2, k3 de l'ordre délivré par l'estimateur harmonique 5 ;
- un additionneur 19 recevant en entrée les sorties des troisièmes multiplicateurs 18 ; et
- un soustracteur 20 configuré pour soustraire la somme délivrée par l'additionneur 19 au signal numérisé Vadc.

Les sorties de l'estimateur harmonique 5 sont alors utilisées par le module de reconstitution 6 destiné à reconstituer le signal linéarisé, comme illustré sur la figure 5.

L'angle de référence $\alpha$ permet de recréer les termes $[\sin(\omega t)]^2$ et $[\sin(\omega t)]^3$. Le principe de correction harmonique inverse consiste à pondérer ces termes par les estimations harmoniques k2 et k3 pour venir les soustraire du signal d'entrée. On reconstitue ainsi le signal de mouvement d'origine Ao.sin($\omega$t) qui pourra être exploité par la suite du traitement de signal. A, ce principe peut aisément être étendu aux ordres harmoniques supérieurs ou limité à un ordre harmonique particulier.

Il est à noter qu'un tel procédé se base sur une pondération ½ et ¾ des termes harmoniques (Vadc = [k1+¾.k3].sin($\omega$t) + [-½.k2].cos(2$\omega$t) + [-¼.k3].sin(3($\omega$t)). Cette pondération est réutilisée de manière inverse par l'estimateur harmonique 5 pour obtenir les coefficients k2 et k3.

De manière plus globale on peut considérer ce dispositif comme étant en "boucle ouverte", un biais ou une imperfection dans les étages de traitement pouvant entrainer une erreur sur l'estimation des termes k2 et k3 (imperfections de quantification, résolution des calculs, ...). Ceci est d'autant plus vrai que les amplitudes manipulées restent faibles au regard du signal fondamental.

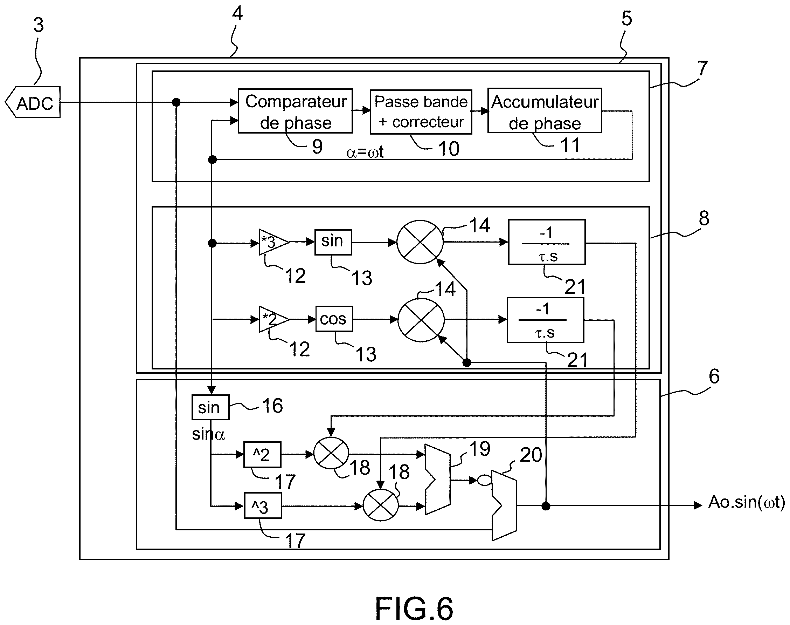

On peut alors envisager, comme illustré sur la figure 6 une alternative en "boucle fermé" comprenant une boucle de rétroaction du signal reconstitué A0sin(ωt) en sortie du module de reconstitution 6 vers l'estimateur harmonique 5.

Cette alternative met en oeuvre deux intégrateurs 21 dans la partie estimation des harmoniques et utilise l'information linéarisée de sortie. Ainsi l'estimateur harmonique 5 cherche directement à annuler les termes harmoniques sur le signal de sortie et permet d'éliminer dynamiquement les termes harmoniques ciblés.

De la même manière, ce dispositif en "boucle fermée" peut être étendu aux ordres harmoniques supérieurs ou limité à un ordre harmonique particulier, par exemple l'ordre 3.

Le système permet d'éliminer totalement les termes harmoniques choisis, par le fait qu'il peut être implémenté sous la forme d'un système bouclé: à ce titre, ce système rend totalement linéaire toute la chaîne de détection, incluant les étages électroniques de mise en forme du signal qui peuvent aussi apporter des non-linéarités entrainant des termes harmoniques : ainsi, les performances de l'étage de détection dans son ensemble sont améliorées.

Un autre avantage de la présente invention consiste en une exploitation directe du signal principal, sans nécessiter l'ajout de signaux complémentaires et leur mise en forme.


**Revendications**

1. Système de capteur (1) de déplacement capacitif à peignes imbriqués, comprenant une détection capacitive selon une direction (y) perpendiculaire aux surfaces des peignes en vis-à-vis, les peignes étant soumis à un mouvement sinusoïdal ($A_0.\sin(\omega t)$) selon ladite direction (y), comprenant :

   - un dispositif de conversion (2) en tension électrique de la capacité délivrée par le capteur (1) ;
   - un convertisseur analogique/numérique (3) configuré pour numériser la tension électrique délivrée par le dispositif de conversion (2), et fournir un signal numérisé (Vadc) ; et
   - une unité de commande (4) comprenant :

      - un estimateur harmonique (5) configuré pour estimer les amplitudes des harmoniques d'ordre inférieur ou égal à un ordre maximum à partir du signal numérisé (Vadc) et un angle de référence ($\alpha$) correspondant à l'angle instantané de la pulsation d'entrée ($\omega t$) ; et
      - un module de reconstitution (6) du signal à partir des amplitudes et de l'angle de référence fournis par l'estimateur harmonique (5) et du signal numérisé délivré par le convertisseur analogique/numérique (3).

2. Système selon la revendication 1, dans lequel l'estimateur harmonique (5) comprend une boucle à verrouillage de phase (7), verrouillée sur le signal numérisé (Vadc) délivré par le convertisseur analogique/numérique (3), délivrant l'angle de référence ($\alpha$) et un module d'estimation (8) des amplitudes (k2, k3) des harmoniques d'ordre inférieur ou égal à l'ordre maximum.

3. Système selon la revendication 2 dans lequel la boucle à verrouillage de phase (7) comprend un comparateur de phase (9), un module (10) filtre passe-bas et correcteur de boucle, et un accumulateur de phase (11) disposés en série, le comparateur de phase (9) recevant en entrée le signal numérisé (Vadc) et l'angle de référence ($\alpha$) délivré en sortie de l'accumulateur de phase (11), et délivrant en sortie un signal d'erreur de phase (EP) au module (10) filtre passe-bas et correcteur de boucle, le module (10) filtre passe-bas et correcteur de boucle filtrant les termes de haute fréquences supérieures à un seuil et corrigeant l'angle de référence, délivrant en sortie une consigne de fréquence à l'accumulateur de phase déterminant l'angle de référence par sommation de pas de phase élémentaires.

4. Système selon la revendication 2 ou 3, dans lequel le module d'estimation (8) des amplitudes (k2, k3) des harmoniques d'ordre inférieur ou égal à l'ordre maximum comprend, pour chaque amplitude d'harmonique comprend un premier multiplicateur (12) multipliant l'angle de référence ($\alpha$) par l'ordre de l'amplitude harmonique, un module (13) cosinus si l'ordre est pair ou un module sinus si l'ordre est impair recevant en entrée la sortie du premier multiplicateur (12), un deuxième multiplicateur (14) multipliant la sortie du module (13) cosinus ou sinus par le signal numérisé (Vadc), et un filtre passe-bas (15) disposant d'un gain statique inverse du coefficient de développement trigonométrique, délivrant l'amplitude harmonique (ki) de l'ordre (i).

5. Système selon l'une des revendications précédentes, dans lequel le module de reconstitution du signal comprend :

   - un module sinus (16) recevant en entrée l'angle de référence ($\alpha$) délivré par l'estimateur harmonique (5), et délivrant son sinus en sortie ;
- pour chaque amplitude d'harmonique d'ordre inférieur ou égal à l'ordre maximum, un module (17) d'élévation du sinus de l'angle de référence à la puissance l'ordre, un troisième multiplicateur (18) multipliant la sortie délivrée par le module (17) d'élévation par l'amplitude harmonique (k2, k3) de l'ordre délivré par l'estimateur harmonique (5) ;
- un additionneur (19) recevant en entrée les sorties des troisièmes multiplicateurs (18) ; et
- un soustracteur (20) configuré pour soustraire la somme délivrée par l'additionneur (19) au signal numérisé (Vadc).

6. Système selon l'une des revendications précédentes, fonctionnant en boucle fermée, comprenant une boucle de rétroaction du signal reconstitué (A0sin(ωt)) en sortie du module de reconstitution (6) vers l'estimateur harmonique (5).

7. Système selon la revendication 6, dépendant de la revendication 4, dans lequel le signal reconstitué remplace le signal d'entrée en entrée des deuxièmes multiplicateurs (14), et dans lequel des correcteurs (21) présentant une fonction intégrale remplacent les filtres passe-bas (15).

8. Système selon l'une des revendications précédentes, dans lequel l'ordre maximum vaut 3.

**Patentansprüche**

1. Kapazitives Wegsensorsystem (1) mit ineinandergreifenden Kämmen, umfassend eine kapazitive Detektion in einer Richtung (y) senkrecht zu den Oberflächen der gegenüberliegenden Kämme, wobei die Kämme einer sinusförmigen Bewegung ($A_0$.sin(ωt)) in der genannten Richtung (y) unterworfen sind, Folgendes umfassend:

- eine Vorrichtung (2) zur Umwandlung der von dem Sensor (1) ausgegebenen Kapazität in eine elektrische Spannung;
- einen Analog-Digital-Wandler (3), der so konfiguriert ist, dass er die von der Umwandlungsvorrichtung (2) ausgegebene elektrische Spannung digitalisiert und ein digitalisiertes Signal (Vadc) bereitstellt; und
- eine Steuereinheit (4), Folgendes umfassend:

- einen Oberschwingungsschätzer (5), der so konfiguriert ist, dass er die Amplituden der Oberschwingungen mit einer Ordnung kleiner oder gleich einer maximalen Ordnung aus dem digitalisierten Signal (Vadc) und einem Referenzwinkel (α), der dem momentanen Winkel der Eingangspulsation (ωt) entspricht, schätzt; und
- ein Modul zur Rekonstruktion (6) des Signals anhand der Amplituden und des Referenzwinkels, die vom Oberschwingungsschätzer (5) ausgegeben werden, und anhand des digitalisierten Signals, das vom Analog-Digital-Wandler (3) ausgegeben wird.

2. System nach Anspruch 1, wobei der Oberschwingungsschätzer (5) eine Phasenregelschleife (7) umfasst, die mit dem digitalisierten Signal (Vadc) verkoppelt ist, das von dem Analog-Digital-Wandler (3) ausgegeben wird, den Referenzwinkel (α) ausgibt und ein Modul (8) zur Schätzung der Amplituden (k2, k3) der Oberschwingungen mit einer Ordnung aufweist, die kleiner oder gleich der maximalen Ordnung ist.

3. System nach Anspruch 2, wobei die Phasenregelschleife (7) einen Phasenkomparator (9), ein Modul (10) mit Tiefpassfilter und Schleifenkorrektor und einen Phasenakkumulator (11) umfasst, die in Reihe angeordnet sind, wobei der Phasenkomparator (9) am Eingang das digitalisierte Signal (Vadc) und den Referenzwinkel (α) empfängt, der am Ausgang des Phasenakkumulators (11) ausgegeben wird, und am Ausgang ein Phasenfehlersignal (EP) an das Modul (10) mit Tiefpassfilter und Schleifenkorrektor ausgibt, wobei das Modul (10) mit Tiefpassfilter und Schleifenkorrektor die Hochfrequenzterme oberhalb eines Schwellenwerts filtert und den Referenzwinkel korrigiert, wobei es am Ausgang einen Frequenzsollwert an den Phasenakkumulator ausgibt, der den Referenzwinkel durch Summieren von elementaren Phasenschritten bestimmt.

4. System nach Anspruch 2 oder 3, wobei das Modul (8) zur Schätzung der Amplituden (k2, k3) der Oberschwingungen mit einer Ordnung kleiner oder gleich der maximalen Ordnung für jede Amplitude der Oberschwingung einen ersten Multiplikator (12) umfasst umfasst, der den Referenzwinkel (α) mit der Ordnung der Oberschwingungsamplitude multipliziert, ein Kosinusmodul (13), wenn die Ordnung gerade ist, oder ein Sinusmodul, wenn die Ordnung ungerade ist, das am Eingang den Ausgang des ersten Multiplizierers (12) empfängt, einen zweiten Multiplizierer (14), der den Ausgang des Kosinus- oder Sinusmoduls (13) mit dem digitalisierten Signal (Vadc) multipliziert, und einen Tiefpassfilter (15), der über eine statische Verstärkung verfügt, die sich umgekehrt zum trigonometrischen Entwicklungskoeffizienten verhält und die Oberschwingungsamplitude (ki) der Ordnung (i) ausgibt.

5. System nach einem der vorhergehenden Ansprüche, wobei das Modul zur Rekonstruktion des Signals Folgendes umfasst:

- ein Sinusmodul (16), das am Eingang den vom Oberschwingungsschätzer (5) ausgegebenen Referenzwinkel ($\alpha$) empfängt und am Ausgang seinen Sinus ausgibt;
- für jede Amplitude der Oberschwingungen mit einer Ordnung, die kleiner oder gleich der maximalen Ordnung ist, ein Modul (17) zur Erhöhung des Sinus des Referenzwinkels auf die Leistung die Ordnung, einen dritten Multiplizierer (18), der den vom Erhöhungsmodul (17) ausgegebenen Ausgang mit der Oberschwingungsamplitude (k2, k3) der vom Oberschwingungsschätzer (5) ausgegebenen Ordnung multiplizier;
- einen Addierer (19), der am Eingang die Ausgänge der dritten Multiplizierer (18) empfängt; und
- einen Subtrahierer (20), der so konfiguriert ist, dass er die von dem Addierer (19) ausgegebene Summe von dem digitalisierten Signal (Vadc) subtrahiert.

6. System nach einem der vorhergehenden Ansprüche, das in einer geschlossenen Schleife arbeitet, umfassend eine Rückkopplungsschleife des rekonstruierten Signals (A0sin($\omega$t)) am Ausgang des Rekonstruktionsmoduls (6) zum Oberschwingungsschätzer (5).

7. System nach Anspruch 6 in Abhängigkeit von Anspruch 4, wobei das rekonstruierte Signal das Eingangssignal am Eingang der zweiten Multiplikatoren (14) ersetzt, und wobei Korrektoren (21) mit einer Integralfunktion die Tiefpassfilter (15) ersetzen.

8. System nach einem der vorhergehenden Ansprüche, wobei die maximale Ordnung 3 beträgt.

## Claims

1. A capacitive displacement sensor system (1) with interdigitated combs, comprising capacitive detection in a direction (y) perpendicular to the surfaces of the combs facing one another, the combs being subjected to a sinusoidal movement ($A_0.\sin(\omega t)$) in said direction (y), comprising:

- a device (2) for converting the capacitance delivered by the sensor (1) into a voltage;
- an analog/digital converter (3) configured to digitise the voltage delivered by the conversion device (2), and supply a digitised signal (Vadc); and
- a control unit (4) comprising:

- a harmonic estimator (5) configured to estimate the amplitudes of the harmonics of order less than or equal to a maximum order based on the digitised signal (Vadc) and a reference angle ($\alpha$) corresponding to the instantaneous angle of the input angular frequency ($\omega t$); and
- a signal reconstruction module (6) for reconstructing the signal from the amplitudes and the reference angle that are supplied by the harmonic estimator (5) and from the digitised signal delivered by the analog/digital converter (3).

2. The system according to claim 1, wherein the harmonic estimator (5) comprises a phase-locked loop (7), locked to the digitised signal (Vadc) delivered by the analog/digital converter (3), delivering the reference angle ($\alpha$), and an estimation module (8) for estimating the amplitudes (k2, k3) of the harmonics of order less than or equal to the maximum order.

3. The system according to claim 2, wherein the phase-locked loop (7) comprises a phase comparator (9), a low-pass filter and loop corrector module (10), and a phase accumulator (11), all arranged in series, the phase comparator (9) receiving, at input, the digitised signal (Vadc) and the reference angle ($\alpha$) delivered at the output of the phase accumulator (11), and outputting a phase error signal (EP) to the low-pass filter and loop corrector module (10), the low-pass filter and loop corrector module (10) filtering the terms with high frequencies greater than a threshold and correcting the reference angle, outputting a frequency setpoint to the phase accumulator determining the reference angle by summing elementary phase steps.

4. The system according to claim 2 or 3, wherein the estimation module (8) for estimating the amplitudes (k2, k3) of the harmonics of order less than or equal to the maximum order comprises, for each harmonic amplitude, comprises a first multiplier (12) multiplying the reference angle ($\alpha$) by the order of the harmonic amplitude, a cosine module (13) if the order is even or a sine module if the order is odd, receiving the output of the first multiplier (12) at input, a second multiplier (14) multiplying the output of the cosine or sine module (13) by the digitised signal (Vadc), and a low-pass filter (15) having a static gain inverse to the trigonometric expansion coefficient, delivering the harmonic amplitude (ki) of the order (i).

5. The system according to one of the preceding claims, wherein the signal reconstruction module comprises:

- a sine module (16) receiving the reference angle ($\alpha$) delivered by the harmonic estimator (5) at input, and delivering its sine at output;
- for each harmonic amplitude of order less than or equal to the maximum order, an increase module (17) for increasing the sine of the reference angle to the power the order, a third multiplier (18) multiplying the output delivered by the increase module (17) by the harmonic amplitude (k2, k3) of the order delivered by the harmonic estimator (5);
- an adder (19) receiving the outputs of the third multipliers (18) at input; and
- a subtractor (20) configured to subtract the sum delivered by the adder (19) from the digitised signal (Vadc).

6. The system according to one of the preceding claims, operating in closed-loop mode, comprising a feedback loop feeding back the reconstructed signal (A0sin($\omega$t)) at output of the reconstruction module (6) to the harmonic estimator (5).

7. The system according to claim 6, dependent on claim 4, wherein the reconstructed signal replaces the input signal at input of the second multipliers (14), and wherein correctors (21) having an integral function replace the low-pass filters (15).

8. The system according to one of the preceding claims, wherein the maximum order is 3.

S

d

## FIG.1

peigne

r

h

e1

e2

Y

X

Z

## FIG.2

**FIG.3**

FIG.4

FIG.5

FIG.6

EP 4 168 731 B1

**EP 4 168 731 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3252429 A1
- US 9797750 B